# EUROPÄISCHE PATENTANMELDUNG

(11) **EP 1 319 502 A1**
(43) Veröffentlichungstag der Anmeldung: **18.06.2003**
(21) Anmeldenummer: 02027755.4
(22) Anmeldetag: 11.12.2002
(51) Int. Cl.: B32B 27/30, B32B 27/06, B44C 5/04

(54) **Oberflächenfolie zum Aufkaschieren auf ein Substrat**

(30) Priorität: 14.12.2001 DE 10161806; 21.12.2001 DE 10163698
(71) Anmelder: Leonard Kurz GmbH & Co. KG, 90763 Fürth (DE)
(72) Erfinder: Marquardt, Torsten, 90513 Zirndorf (DE)
(74) Vertreter: LOUIS- PÖHLAU- LOHRENTZ

(57) **Zusammenfassung**

Es wird eine Oberflächenfolie 1 beschrieben, die aus einer Deckfolie 2 und einer Grundfolie 3 durch Kalandrieren hergestellt wird. Vor dem Kalandrieren wird auf die Deckfolie 2 eine Dekorschicht aufgebracht. Besondere Vorteile ergeben sich, wenn die Dekorschicht 7 über ein Folientransferverfahren, z.B. über einen Heißprägevorgang unter Einsatz einer Heißprägefolie aufgebracht wird.

## Beschreibung

Die Erfindung betrifft eine Oberflächenfolie zum Aufbringen, vorzugsweise Aufkaschieren, auf ein Substrat aus Kunststoff, Metall, Holz oder dergleichen sowie ein Verfahren zur Herstellung einer solchen Oberflächenfolie.

Aus DE 38 17 479 A1 ist eine solche mehrschichtige Oberflächenfolie sowie das Verfahren zur Herstellung einer solchen Oberflächenfolie bekannt. Diese bekannte Oberflächenfolie wird grundsätzlich aus mindestens zwei separaten Folien durch Laminieren hergestellt und zwar aus einer Deckfolie aus glasklarem Polyacrylat oder PVDF oder PVF und einer Grundfolie, welche vor dem Laminiervorgang eingefärbt, bedruckt oder bemustert wird. Die Grundfolie besteht aus PMMA mit einem Zusatz von PBMA zur Flexibilisierung. Aufgrund dieser Materialzusammensetzung der Grundfolie ergeben sich limitierende Randbedingungen für die Einfärbung, Bedruckung bzw. Bemusterung. Entsprechendes gilt auch aufgrund der Tatsache, daß die zur Farbgebung bzw. Bemusterung bearbeitete Grundfolie grundsätzlich mit der separat ausgebildeten Deckfolie über Kalandrieren verbunden wird.

Der Erfindung liegt die Aufgabe zugrunde, eine Oberflächenfolie der eingangs genannten Art sowie ein Verfahren zur Herstellung einer solchen Oberflächenfolie und ein Verfahren zum Aufbringen einer solchen Laminierfolie zu schaffen, welche höhere Gestaltungsmöglichkeiten hinsichtlich der Farboder Mustergebung bei hoher Präzision ermöglichen und ein vereinfachtes Herstellungsverfahren möglich machen.

Diese Aufgabe löst die Erfindung mit einer Oberflächenfolie gemäß Anspruch 1 sowie einem Verfahren zur Herstellung einer Oberflächenfolie gemäß Anspruch 21 und einem Verfahren zum Aufbringen einer Oberflächenfolie auf ein Substrat gemäß Anspruch 28.

Die aus Polymeren der Methacrylatgruppe bestehende erste Schicht ist als sogenannte Deckfolie ausgebildet. Die Dekorschicht wird auf dieser Folie aufgebracht und zwar auf der zum Substrat gewandten Seite der Folie. Damit wird eine Folie erhalten, die über Kalandrieren mit einer oder mehreren weiteren Folien zu der Oberflächenfolie ausgebildet werden kann oder unmittelbar als Oberflächenfolie zum Aufbringen, vorzugsweise Aufkaschieren, auf die Substratoberfläche eingesetzt werden kann.

Die Dekorschicht kann auf die Deckfolie über unterschiedliche Verfahren aufgebracht werden, beispielsweise in einem Druckverfahren, vorzugsweise Trockendruckverfahren, z.B. Digitaldruckverfahren. Besondere Vorteile ergeben sich, wenn die Dekorschicht in einem "trockenes" Lack-Transferverfahren, vorzugsweise Heißprägeverfahren, auf die Deckfolie aufgebracht wird. Bei den Folientransferverfahren wird zur Ausbildung der Dekorschicht auf der Deckfolie eine entsprechende Transferfolie bzw. Heißprägefolie eingesetzt. Es handelt sich dabei um eine Transferfolie, die die Dekorschicht als eine ein- oder mehrlagige Schicht aufweist, die bei dem Transferprozeß auf die Deckfolie übertragen wird. Das Folientransferverfahren kann als "trockenes" Lack-Transferverfahren ausgebildet sein.

Die Dekorschicht kann in einem oder mehreren sukzessive aufeinander folgenden Schritten auf die Deckfolie aufgebracht werden. Im Falle der Anwendung eines Folientransferverfahrens kann eine mehrschichtige Dekorschicht in einem gemeinsamen Schritt übertragen werden, indem eine entsprechende Transferfolie mit Mehrschichtenaufbau eingesetzt wird. Alternativ können auch mehrere Transferschritte sukzessive hintereinander ausgeführt werden, indem mehrere Transferfolien in nacheinander folgenden Schritten auf die Deckfolie aufgebracht werden.

Die Dekorschicht kann als farbgebende Schicht ausgebildet sein, d.h. z.B. entsprechend pigmentiert sein. Sie kann aber auch alternativ oder zusätzlich mit einer Strukturierung oder einem ein- oder mehrfarbigen Muster versehen sein. Ferner sind Ausführungen vorgesehen, bei der die Dekorschicht als UV-stabilisierende Schicht und/oder energieabsorbierende Schicht und/oder lichtreflektierende Schicht ausgebildet ist. Auf oder in der Dekorschicht kann auch eine Metallschicht oder es können Metallpigmente als Komponenten der Schicht vorgesehen sein.

Eine hohe Witterungsbeständigkeit der Oberflächenfolie wird erhalten, wenn eine entsprechende witterungsbeständige Schutzschicht vorgesehen ist. Diese kann als ein- oder mehrlagige Schicht der Deckfolie ausgebildet sein. Diese kann bereits mit der Herstellung der Deckfolie auf diverse Weise hergestellt werden und z. B. einen integrierten Bestandteil der Deckfolie bilden. Die witterungsbeständige Schutzschicht kann aber auch aus einer separaten Schutzfolie ausgebildet sein, die durch Kalandrieren auf die Deckfolie aufgebracht wird.

Bei Ausführungen der Oberflächenfolie, die aus einer in der oben beschriebenen Weise aufgebauten Deckfolie mit darauf aufgebrachter Dekorschicht und aus einer Grundfolie aus elastifiziertem Polymer besteht, erfolgt die Herstellung der Oberflächenfolie vorzugsweise durch Kalandrieren von dieser mit der Dekorschicht versehenen Deckfolie und der Grundfolie. Es entstehen dabei Oberflächenfolien mit einer aus der Deckfolie ausgebildeten Deckschicht und einer durch die Dekorschicht gebildeten Zwischenschicht und einer durch die Grundfolie gebildeten Grundschicht.

Die Deckfolie kann als ein- oder mehrlagige glasklare Schicht ausgebildet sein. Ferner kann auch die Grundfolie als eine ein- oder mehrlagige glasklare Schicht ausgebildet sein. Es kann vorgesehen sein, daß die Farbgebung ausschließlich durch die Dekorschicht erfolgt. Bei besonderen Ausführungen kann auch vorgesehen sein, daß die Deckfolie und/oder die Grundfolie bereits eine eigene Farbgebung z.B. durch entsprechende Pigmentierung aufweist. Es kann vorgesehen sein, daß die Deckfolie und/oder die Grundfolie transparent und entsprechend getönt ausgebildet ist.

Die Deckfolie kann aus PMMA und/oder PMMA-Blend und/oder PMMA-Koextrusion ausgebildet sein. Im Falle der Materialausbildung aus PMMA-Blend kann das Material als homogene Mischung ausgebildet sein und die Deckfolie kann als einlagiger Film bestehend aus diesem Material ausgeführt sein. Im Falle des Einsatzes von PMMA-Koextrusion können durch gleichzeitige Extrusion mehrere Lagen erzeugt werden. Die Deckfolie kann in diesem Falle als mehrlagiger Film ausgebildet sein. Die Deckfolie kann eine vorzugsweise konstante Dicke im Bereich von 20 µ bis 120 µ, vorzugsweise im Bereich von 40 µ bis 70 µ aufweisen.

Die Grundfolie kann aus PMMA und/oder PVC und/oder ABS und/oder PP oder ähnlichem Material bzw. Materialmischungen ausgebildet sein. Sie kann eine vorzugsweise konstante Dicke im Bereich von 30 µ bis 500 µ, vorzugsweise im Bereich von 40 µ bis 120 µ aufweisen.

Das Aufbringen einer Oberflächenfolie, die in der oben beschriebenen Weise hergestellt und aufgebaut ist, kann auf einer Oberfläche eines Substrats erfolgen, das aus beliebigem Material besteht, z.B. aus Kunststoff, Metall, Holz oder dergleichen. Zum Aufbringen wird zunächst eine Klebeschicht auf der Oberfläche des Substrats aufgebracht und sodann die Oberflächenfolie auf diese mit der Klebeschicht versehenen Substratoberfläche aufgebracht. Alternativ oder zusätzlich kann eine Klebeschicht auf der Oberflächenfolie und zwar auf der dem Substrat zugewandten Seite der Oberflächenfolie aufgebracht werden und sodann die Oberfläche auf das Substrat aufgebracht werden.

Die Klebeschicht kann unter Verwendung eines transparenten farblosen Klebers ausgebildet werden. Alternativ kann auch ein deckender, vorzugsweise farbiger Kleber, z.B. ein pigmentierter Kleber eingesetzt werden, um eine optische Abdeckung zum Substrat hin zu erhalten.

Die Oberflächenfolie kann insbesondere auch für Außenanwendungen, z.B. auf Türrahmen, Fensterrahmen aufgebracht werden. Mit dem betreffenden Aufbau und Herstellungsverfahren kann sie als besonders witterungsbeständige, insbesondere hitze-, feuchtigkeits- und korrosionsbeständige Folie ausgeführt werden. Aufgrund des speziellen Aufbringens der Dekorschicht auf der zum Substrat gewandten Seite der Deckfolie, insbesondere über ein Folientransferverfahren, ist es möglich, besonders präzise und vielfältige Gestaltungen der Dekorschicht zu realisieren.
Im nachfolgenden werden zwei Ausführungsbeispiele der Erfindung anhand von Figuren näher erläutert.

Dabei zeigen:
- Fig. 1: eine schematische Schnittdarstellung eines ersten Ausführungsbeispiels einer Oberflächenfolie aufgebracht auf einem Substrat;
- Fig. 2: eine Fig. 1 entsprechende Schnittdarstellung eines zweiten Ausführungsbeispiels einer Oberflächenfolie.

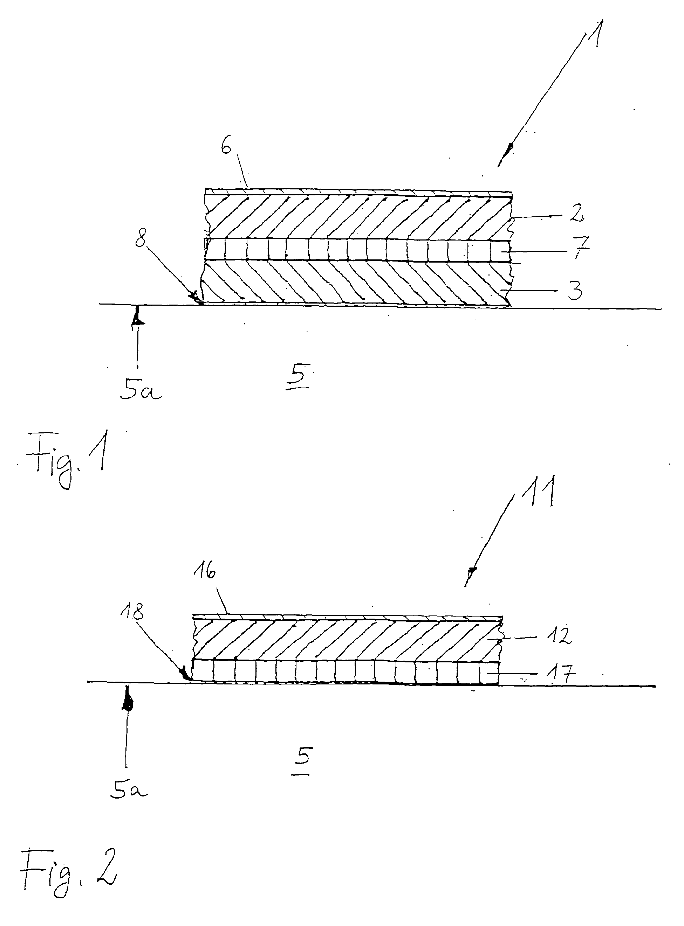

Bei dem in Fig. 1 dargestellten Ausführungsbeispiel einer Oberflächenfolie besteht die Oberflächenfolie 1 aus einer eine Dekorschicht 7 aufweisende Deckfolie 2 und einer Grundfolie 3, die über Kalandrieren miteinander verbunden sind. Fig. 1 zeigt die Oberflächenfolie 1 in auf einer Oberfläche 5a eines Substrats 5 aufgebrachtem Zustand.

Die Deckfolie 2 ist als ein ein- oder mehrlagiger Film aus PMMA (Polymethylmethacrylat) ausgebildet. Im Falle des einlagigen Films besteht dieser aus PMMA-Blend, ein homogenes PMMA-Gemisch. Im Falle des mehrlagigen Films besteht dieser aus PMMA-Koextrusion, ein durch gleichzeitiges paralleles Extrudieren erzeugter Mehrschichtenfilm. Die Deckfolie 2 weist auf ihrer vom Substrat 5 abgewandten Seite eine witterungsbeständige Schutzschicht 6, vorzugsweise aus PVDF (Polyvinylidenfluorid) auf. An der zum Substrat gewandten Seite weist die Deckfolie 2 eine farbige Dekorschicht 7 auf. Diese Dekorschicht 7 ist vor dem Kalandrieren von Deckfolie 2 und Grundfolie 3 auf die betreffende Seite der Deckfolie 2 aufgebracht worden. Dieses Aufbringen der Deckfolie 2 erfolgt vor dem Zusammenfügen durch Kalandrieren von Deckfolie 2 und Grundfolie 3 nach folgendem Verfahren: Die Dekorschicht 7 wird durch ein Folientransferverfahren, z.B. über Heißprägen auf die Deckfolie 2 aufgebracht. Dies bedeutet, daß zum Aufbringen der Dekorschicht 7 eine entsprechende Transferfolie eingesetzt wird, die aus einer Trägerfolie mit darauf angeordneter Dekorschicht 7 besteht und diese Dekorschicht 7 durch entsprechenden Transferprozeß auf die Deckfolie aufgebracht wird und zwar im Falle der Verwendung einer Heißprägefolie durch Heißprägen. Die Dekorschicht 7 kann mehrschichtig sein und in einem einzigen Transferschritt auf die Deckfolie aufgebracht werden. Es können aber auch mehrere Schichten sukzessive jeweils in aufeinanderfolgenden Transferschritten auf die Deckfolie 2 aufgebracht werden.

Die Dekorschicht 7 kann alternativ zum Transferprozeß auch über andere Verfahren, z.B. Druckverfahren, insbesondere Trockendruck, wie Digitaldruck, auf die Deckfolie aufgebracht werden.

Die Dekorschicht 7 ist bei dem dargestellten Ausführungsbeispiel vorzugsweise als farbgebende Schicht ausgebildet. Sie kann zusätzlich oder alternativ auch als UV-stabilisierende und Energie absorbierende oder reflektierende Schicht ausgebildet sein. Dies kann dadurch realisiert werden, daß die Dekorschicht 7 entsprechende Komponenten aufweist oder entsprechende Komponenten in die Dekorschicht 7 eingebracht werden. Die Dekorschicht 7 kann auch Metallpigmente und Metallschichten aufweisen und die Dekorschicht 7 kann auch mehr oder weniger transparent oder getönt ausgebildet sein. Sie ist vorzugsweise jedoch als deckende Schicht, d.h. nicht transparent, ausgebildet.

Die Grundfolie 3 kann aus elastifiziertem Polymer, z.B. PMMA (Polymethylmethacrylat), PVC (Polyvinylchlorid), ABS (Acrylnitril/Butadien/Styrol-Pfropfcopolymer), PP (Polypropylen) oder ähnlichem Material sowie entsprechenden Materialmischungen bestehen.

Die Oberflächenfolie 1 wird bei dem dargestellten Ausführungsbeispiel durch Kalandrieren der Deckfolie 2 und Grundfolie 3 hergestellt. Die zum Einsatz kommende Deckfolie 2 ist zuvor nach dem oben beschriebenen Verfahren mit der Deckschicht 7 versehen worden. Beim Zusammenfügen der Deckfolie 2 mit der Grundfolie 3 durch Kalandrieren ergibt sich die in Fig. 1 dargestellte Oberflächenfolie 1, bei der die Dekorschicht 7 eine Zwischenschicht bildet. Die Dekorschicht 7 ist in dem zusammengefügten Zustand unmittelbar mit der ihr zugewandten Fläche der Grundfolie 3 verbunden.

Die witterungsbeständige PVDF-Schutzschicht 6 bildet die Oberseite der Oberflächenfolie 1. Diese Schutzschicht 6 ist vorzugsweise ebenfalls bereits bei der zum Einsatz kommenden Deckfolie 2 auf der Deckfolie 2 als Schicht vorhanden. Alternativ kann diese Schutzschicht 6 jedoch auch nach dem Zusammenfügen von Deckfolie 2 und Grundfolie 3 auf der Oberseite der Oberflächenfolie über beliebige Verfahren aufgebracht werden. Die Schicht 6 kann auch als separate Schutzfolie ausgebildet sein, die über einen separaten Kalandrierschritt auf die Deckfolie 2 oder die fertiggestellte Oberflächenfolie 1 aufgebracht wird.

Das Aufbringen der Oberflächenfolie 1 auf die Oberfläche 5a des Substrats 5 erfolgt, indem zunächst auf der Substratoberfläche 5a eine Klebeschicht 8 aufgebracht wird und sodann die Oberflächenfolie 1 durch Kaschieren aufgebracht wird. Hierbei werden vorzugsweise Walzen mit Metall- oder Silikonoberflächen eingesetzt. Die Klebeschicht 8 kann zur farbigen Abdeckung zum Untergrund, d.h. zum Substrat hin pigmentiert sein.

Die in Fig. 2 dargestellte Oberflächenfolie 11 unterscheidet sich von der in Fig. 1 dargestellten Oberflächenfolie 1 darin, daß sie keine Grundfolie 3 aufweist. Die Oberflächenfolie 11 ist mit der Dekorschicht 17 der Deckfolie 12 unmittelbar auf der Klebeschicht 18 der Substratoberfläche 5a aufgebracht.

Die Herstellung der Oberflächenfolie 11 erfolgt in entsprechender Weise wie bei dem Ausführungsbeispiel in Fig. 1, indem auf der Deckfolie 12, z.B. über einen Transferprozeß die Dekorschicht 17 aufgebracht wird. Alternativ kann auch bei diesem Ausführungsbeispiel in Fig. 2 die Dekorschicht 17 durch Bedrucken, z.B. ein Trockendruckverfahren, insbesondere Digitaldruck, auf der Deckfolie 12 aufgebracht werden.

Das Aufbringen der Oberflächenfolie 11 erfolgt in entsprechender Weise wie in Verbindung mit dem Ausführungsbeispiel in Fig. 1 beschrieben, indem zunächst die Klebeschicht 18 auf der Substratoberfläche 5a und sodann die Oberflächenfolie 11 über Kaschieren aufgebracht wird. In diesem Fall kommt die Dekorschicht 17 unmittelbar auf die Klebeschicht 18 zur Auflage.

## Patentansprüche

1. Oberflächenfolie zum Aufbringen, vorzugsweise Aufkaschieren, auf eine Oberfläche eines Substrats aus Kunststoff, Metall, Holz oder dergleichen, mit einer ein- oder mehrlagigen ersten Schicht (2, 12), die aus Polymeren der Methacrylatgruppe, vorzugsweise PMMA ausgebildet ist;
mit einer ein- oder mehrlagigen farbigen und/oder strukturierten Dekorschicht (7, 17), die mit der ersten Schicht (2, 12) verbunden ist und vorzugsweise mit einer auf der vom Substrat (5) abgewandten Seite der Folie (1) angeordneten witterungsbeständigen ein- oder mehrlagigen Schutzschicht (6, 16), vorzugsweise PVDF-Schicht,
**dadurch gekennzeichnet,**
**daß** die erste Schicht als Deckfolie (2, 12) ausgebildet ist, und
**daß** die Dekorschicht (7, 17) als eine auf der dem Substrat (5) zugewandten Seite der Deckfolie (2, 12) aufgebrachte Schicht (7, 17) ausgebildet ist.

2. Oberflächenfolie nach Anspruch 1,
**dadurch gekennzeichnet,**
**daß** die Dekorschicht (7, 17) in einem Druckverfahren, vorzugsweise Trockendruckverfahren, z.B. Digitaldruckverfahren, auf der Deckfolie aufgebracht ist.

3. Oberflächenfolie nach Anspruch 1
**dadurch gekennzeichnet,**
**daß** die Dekorschicht (7, 17) in einem Folientransferverfahren, vorzugsweise Heißprägeverfahren auf der Deckfolie aufgebracht ist.

4. Oberflächenfolie nach Anspruch 3,
**dadurch gekennzeichnet,**
**daß** die Dekorschicht (7, 17) als ein- oder mehrlagige Schicht einer Transferfolie, vorzugsweise Heißprägefolie ausgebildet ist.

5. Oberflächenfolie nach einem der vorangehenden Ansprüche,
**dadurch gekennzeichnet,**
**daß** die Dekorschicht (7, 17) aus mehreren in sukzessiven Schritten auf der Deckfolie (2, 12) aufgebrachten Schichten besteht.

6. Oberflächenfolie nach einem der vorangehenden Ansprüche,
**dadurch gekennzeichnet,**
**daß** die witterungsbeständige Schutzschicht (6, 16) als ein- oder mehrlagige Schicht (6, 16) der Deckfolie (2, 12) ausgebildet ist.

7. Oberflächenfolie nach einem der Ansprüche 1 bis 5,
**dadurch gekennzeichnet,**
**daß** die witterungsbeständige Schutzschicht (6, 16) aus einer Schutzfolie ausgebildet ist, die durch Zusammenfügen unter Druck und/oder Hitze und/oder durch Kalandrieren auf der Deckfolie (2) aufgebracht ist.

8. Oberflächenfolie nach einem der vorangehenden Ansprüche,
**dadurch gekennzeichnet,**
**daß** die Dekorschicht (7, 17) als UV-stabilisierende Schicht und/oder energieabsorbierende und/oder energiereflektierende Schicht und/oder lichtabsorbierende und/oder lichtreflektierende Schicht ausgebildet ist.

9. Oberflächenfolie nach einem der vorangehenden Ansprüche,
**dadurch gekennzeichnet,**
**daß** die Dekorschicht (7, 17) Metallpigmente und/oder eine Metallschicht aufweist.

10. Oberflächenfolie nach einem der vorangehenden Ansprüche,
**dadurch gekennzeichnet,**
**daß** die Dekorschicht (7, 17) auf der zum Substrat (5) gewandten Seite als Kontaktfläche zur Verklebung (8, 18) mit dem Substrat (5, 5a) ausgebildet ist.

11. Oberflächenfolie nach einem der vorangehenden Ansprüche,
**dadurch gekennzeichnet,**
**daß** auf der zum Substrat (5) gewandten Seite der Dekorschicht (7, 17) eine Grundfolie (3) aus elastifiziertem Polymer angeordnet ist.

12. Oberflächenfolie nach Anspruch 11,
**dadurch gekennzeichnet,**
**daß** die Grundfolie (3) mit der Deckfolie (2) vorzugsweise durch Zusammenfügen unter Druck und/oder Hitze und/oder durch Kalandrieren verbunden ist.

13. Oberflächenfolie nach Anspruch 12,
**dadurch gekennzeichnet,**
**daß** die Dekorschicht (7, 17) auf ihrer zur Grundfolie (3) gewandten Seite unmittelbar als Verbindungsfläche zur Grundfolie (3) ausgebildet ist.

14. Oberflächenfolie nach einem der Ansprüche 1 bis 13,
**dadurch gekennzeichnet,**
**daß** die Grundfolie (3) auf ihrer zum Substrat gewandten Seite als Kontaktfläche zur Verklebung (8) auf dem Substrat (5, 5a) ausgebildet ist.

15. Oberflächenfolie nach einem der vorangehenden Ansprüche,
**dadurch gekennzeichnet,**
**daß** die Deckfolie (2, 12) eine vorzugsweise konstante Dicke im Bereich von 20 bis 120 µ, vorzugsweise im Bereich von 40 bis 70 µ aufweist.

16. Oberflächenfolie nach einem der vorangehenden Ansprüche,
**dadurch gekennzeichnet,**
**daß** die Grundfolie (3) eine vorzugsweise konstante Dicke im Bereich von 30 bis 500 µ, vorzugsweise im Bereich von 40 bis 120 µ aufweist.

17. Oberflächenfolie nach einem der vorangehenden Ansprüche,
**dadurch gekennzeichnet,**
**daß** die Deckfolie (2, 12) als ein- oder mehrlagige glasklare Schicht ausgebildet ist.

18. Oberflächenfolie nach einem der vorangehenden Ansprüche,
**dadurch gekennzeichnet,**
**daß** die Grundfolie (3) als ein- oder mehrlagige glasklare Schicht ausgebildet ist.

19. Oberflächenfolie nach einem der vorangehenden Ansprüche,
**dadurch gekennzeichnet,**
**daß** die Deckfolie (2, 12) aus PMMA und/oder PMMA-Blend und/oder PMMA-Koextrusion ausgebildet ist.

20. Oberflächenfolie nach einem der Ansprüche 12 bis 19,
**dadurch gekennzeichnet,**
**daß** die Grundfolie (3) aus PMMA und/oder PVC und/oder ABS und/oder PP oder ähnlichem Material bzw. Materialmischung ausgebildet ist.

21. Verfahren zur Herstellung einer Oberflächenfolie (1), die eine Schicht (2, 12) mit Dekorschicht (7, 17) aufweist, insbesondere Oberflächenfolie nach einem der vorangehenden Ansprüche,
**dadurch gekennzeichnet,**
**daß** die Schicht (2, 12) aus einer Deckfolie (2, 12) ausgebildet wird, die an der zum Substrat weisenden Seite der Deckfolie (2, 12) mit einer Dekorschicht versehen wird.

22. Verfahren nach Anspruch 21,
**dadurch gekennzeichnet,**
**daß** die Dekorschicht (7, 17) durch ein Druckverfahren, vorzugsweise Trockendruck, z.B. Digitaldruck, auf die Deckfolie aufgebracht wird.

23. Verfahren nach Anspruch 21,
**dadurch gekennzeichnet,**
**daß** die Dekorschicht (7, 17) durch ein Folientransferverfahren, vorzugsweise Heißprägeverfahren auf die Deckfolie (2, 12) aufgebracht wird.

24. Verfahren nach Anspruch 23,
**dadurch gekennzeichnet,**
**daß** in dem Folientransferverfahren eine Transferfolie eingesetzt wird, die die zu übertragende Dekorschicht (7, 17) aufweist.

25. Verfahren nach Anspruch 24,
**dadurch gekennzeichnet,**
**daß** die zum Einsatz kommende Transferfolie eine oder mehrere Schichten aufweist, die bei dem Transfervorgang vorzugsweise in einem Vorgang auf die Deckfolie (2, 12) übertragen werden.

26. Verfahren nach Anspruch 24,
**dadurch gekennzeichnet,**
**daß** in sukzessive nacheinander folgenden Schritten mehrere Schichten (7, 17) über Transferprozesse unter Einsatz mehrerer Transferfolien auf die Deckfolie (2, 12) aufgebracht werden.

27. Verfahren nach einem der Ansprüche 21 bis 26, wobei die herzustellende Oberflächenfolie zusätzlich eine Grundfolie aufweist,
**dadurch gekennzeichnet,**
**daß** nach dem Aufbringen der Dekorschicht (7) auf die Deckfolie (2) die Deckfolie (2) vorzugsweise durch Zusammenfügen unter Druck und/oder Hitze und/oder durch Kalandrieren mit einer Grundfolie (3) verbunden wird.

28. Verfahren zum Aufbringen einer nach einem der Ansprüche 21 bis 27 hergestellten Oberflächenfolie (1) auf eine Oberfläche (5a) eines Substrats (5) aus Kunststoff, Metall, Holz oder dergleichen,
**dadurch gekennzeichnet,**
**daß** eine Klebeschicht (8, 18) auf der Oberfläche (5a) des Substrats (5) aufgebracht wird und sodann die Oberflächenfolie (1) auf die mit der Klebeschicht (8, 18) versehenen Oberfläche (5a) des Substrats (5) aufgebracht wird und/oder daß eine Klebeschicht (8, 18) auf der dem Substrat zugewandten Seite der Oberflächenfolie (1) aufgebracht wird und sodann die Oberflächenfolie (1) mit ihrer Klebeschicht auf die Oberfläche (5a) des Substrats (5) aufgebracht wird.

29. Verfahren nach Anspruch 28,
**dadurch gekennzeichnet,**
**daß** zur Ausbildung der Klebeschicht (8, 18) ein pigmentierter Kleber eingesetzt wird, mit dem eine farbliche Abdeckung zum Substrat (5) hin erfolgt.
